# EUROPEAN PATENT APPLICATION

(11) **EP 4 714 645 A1**
(43) Date of publication of application: **25.03.2026**
(21) Application number: 25202684.4
(22) Date of filing: 17.09.2025
(51) Int. Cl.: B31C 3/00, B31C 11/00

(54) **COREWINDER TO FORM A LOG CORE, PROCESS TO FORM SUCH A CORE, AND TISSUE PAPER LOGS WITH SAID CORE**

(30) Priority: 18.09.2024 IT 202400020788
(71) Applicant: GAMBINI S.p.A., 20123 Milano (IT)
(72) Inventor: PARENTI, Emanuele, 55100 Lucca (LU) (IT); LAZZARESCHI, Paolo, 55100 Lucca (LU) (IT); BUFFA, Giovanni, 51019 Ponte Buggianese (PT) (IT); PICCHI, Fabio, 55013 Lammari (LU) (IT)
(74) Representative: Mondini, Greta

(57) **Abstract**

A corewinder (100) to form a core (200) for tissue paper logs (300) from cardboard strips (201, 202) is described, the corewinder (100) comprises an unwinding station (10) adapted to unwind two or more reels (11, 12) of a cardboard strip (201, 202); a forming station (20), placed downstream of the unwinding station (10) and adapted to spirally wind at least an upper strip (201) and a lower strip (202) being unwound from the reels (11, 12) one on the other, joining them to form a tube (203); a cutting station (30) placed downstream of the forming station (20) and configured to cut the tube (203) being formed to obtain a core (200); the corewinder (100) also comprises a dispenser assembly (40) for an adhesive film (41), configured to unwind an adhesive film (41) connectable to said upper strip (201) to obtain a core (200) at least partially covered by said adhesive film. A process to make a core (200) at least partially covered by such an adhesive film (41) and a tissue paper log (300) comprising such a core (200) are also described.

## Description

The present invention relates to a corewinder to form a core for tissue paper logs. The present invention further relates to a process to form such a core and to a tissue paper log comprising said core.

The present invention is usefully employed in the field of the so-called "tissue" typology of paper, that is, paper for products such as toilet paper, kitchen paper, and the like, particularly for "coreless" applications in which the finished paper roll lacks a core.

It is known to make laminated tissue paper rolls consisting of multiple plies, generally two or three plies, from paper material reels, the so-called logs, which have a greater length but the same diameter as the final paper roll. Such logs are obtained by winding, on a cardboard core generally made in the shape of a tubular element, by means of rewinding machines, a paper ply that has previously undergone various processing steps.

In order to form a paper roll for final applications, the logs are cut into several units to produce single paper rolls of shorter lengths.

In the so-called "coreless" roll applications, in which the paper is wound in layers to form a roll that, however, lacks a core, a known possible solution involves making the log comprising a core, as the latter serves a structural support function during the winding procedure, and subsequently removing the core before cutting the log into single rolls.

It is known that the step of extracting the traditional cardboard core from the log is a critical step, as part of the core itself or the wound paper is often damaged; in particular, the innermost paper spirals connected to the core are subjected to deformation/tearing.

In order to overcome such problems, patent document EP 2711320 B1 describes a reel with a core made of deformable plastic, which is extracted by axially deformation thereof, decreasing its diameter.

Disadvantageously, the method described in such a document is limited to the core material, which must have certain mechanical property requirements to deform elastically and be reused, such as for example a ratio of tensile yield strength to elastic modulus higher than 2%.

Furthermore, the described method provides to make a core having a length greater than that of the wound paper roll, in order to grip the core and axially deform it to allow its extraction. Disadvantageously, such types of logs are bulkier than those of a classic log, in which the core is as long as the paper roll.

Disadvantageously, the cost of plastic cores is higher than the known cardboard ones, and furthermore, they must be disposed of when damaged.

A task underlying the present invention is to provide a corewinder that allows to form a core which is easily extractable while keeping the overall bulks of the logs compact.

A further object of the present invention is to provide a process to make such a core, and a tissue paper log comprising such a core.

The task set forth above, as well as the mentioned and other objects that will become more apparent hereinafter, are achieved by a corewinder as recited in claim 1, a process to form a core as set forth in claim 6, and a tissue paper log comprising such a core as set forth in claim 11.

Other features are provided in the dependent claims.

Further features and advantages will become more apparent from the description of preferred, but not exclusive, embodiments of a corewinder, a process to form a core, and a tissue paper log comprising such a core, illustrated by way of indication and not limitation, with the aid of the attached drawings, in which:

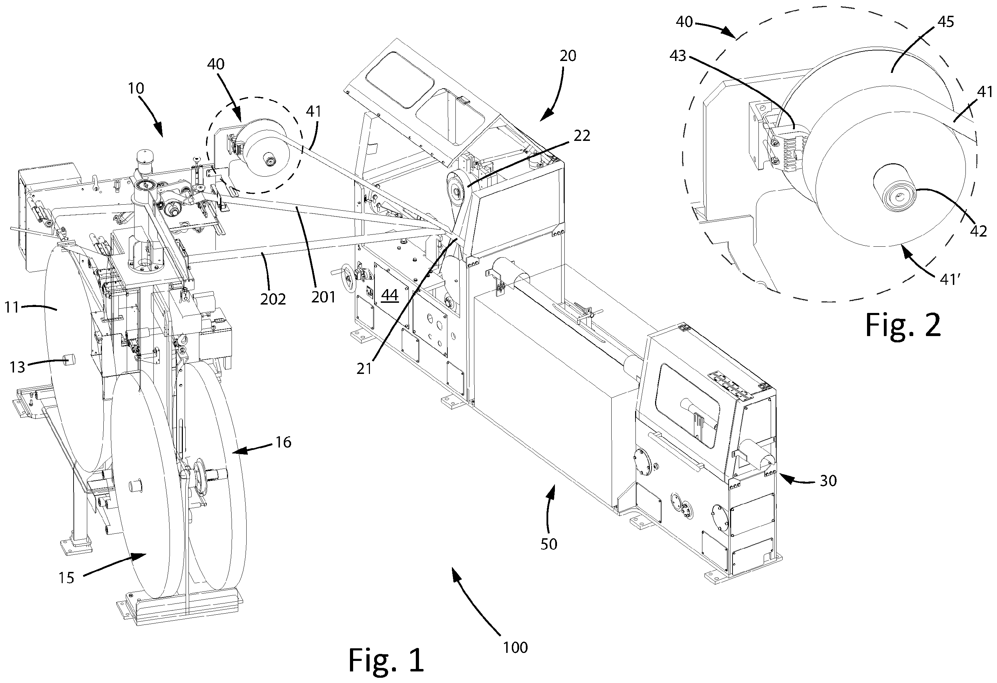

- Figure 1 shows a side perspective view of a corewinder in accordance with a preferred embodiment of the present invention;
- Figure 2 shows an enlarged detail of the corewinder of Figure 1;

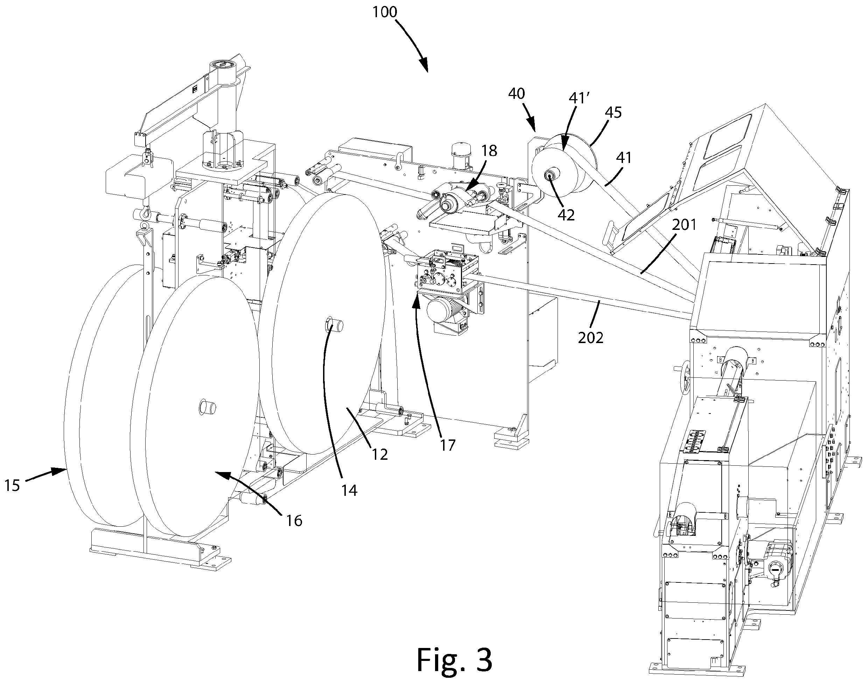

- Figure 3 shows a different side perspective view of the corewinder of Figure 1;

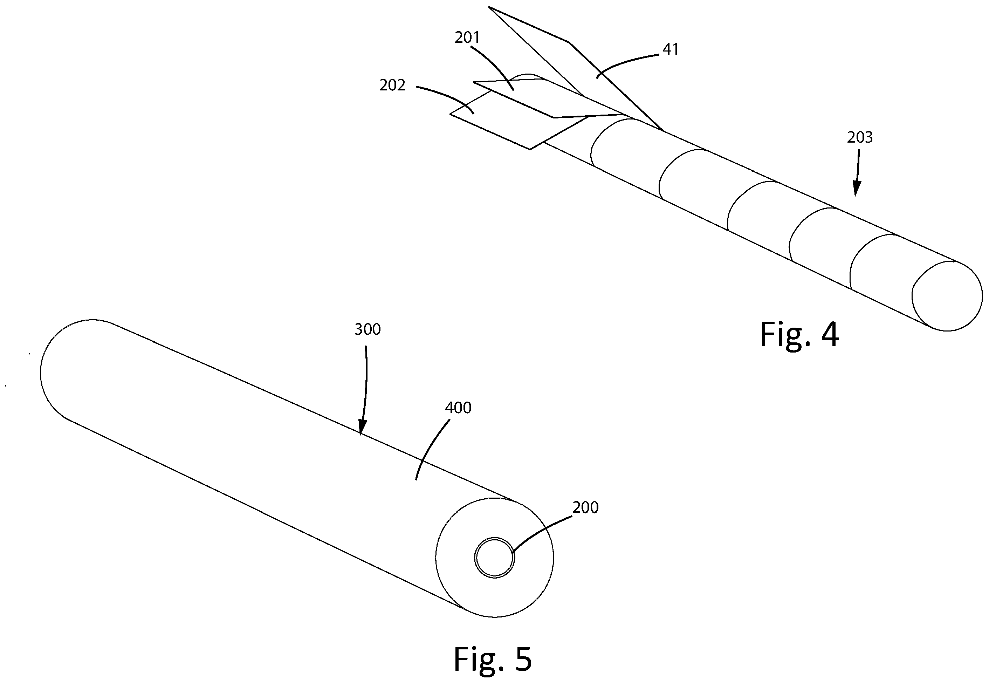

- Figure 4 shows a side perspective view of a cardboard tube being formed by means of the corewinder of Figures 1 and 3;
- Figure 5 shows a side perspective view of a tissue paper log in accordance with the present invention.

With reference to the attached figures, a corewinder marked with reference number 100 is described hereinafter.

The corewinder 100 is adapted to form a core 200 for tissue paper logs 300 from cardboard strips 201, 202.

In accordance with the present invention, the corewinder 100 comprises an unwinding station 10 adapted to unwind two or more reels 11, 12 of a cardboard strip 201, 202. According to the example shown in the figures, the reels 11, 12 to be unwound simultaneously are two. Therefore, the core 200 will be formed by two cardboard strips 201, 202 overlapped one on the other, in particular an upper strip 201 and a lower strip 202.

The corewinder 100 comprises a forming station 20 downstream of the unwinding station 10.

The forming station 20 is adapted to spirally wind at least an upper strip 201 and a lower strip 202 being unwound from the reels 11, 12 one on the other, joining them to form a tube 203.

The corewinder 100 comprises a cutting station 30 downstream of the forming station 20.

The cutting station 30 is configured to cut the tube 203 being formed to obtain a core 200.

In accordance with the present invention, the corewinder 100 is characterized in that it comprises a dispenser assembly 40 for an adhesive film 41. The dispenser assembly 40 is configured to unwind an adhesive film 41 connectable to the upper strip 201 to obtain a core 200 at least partially covered by such an adhesive film 41.

The dispenser assembly is configured to connect the adhesive film 41 directly to the upper strip 201, preferably cold.

The adhesive film 41 has an adhesive side and a non-adhesive side. The adhesive side is intended to contact the upper strip 201, while the non-adhesive side is intended to contact, preferably directly, the tissue paper that will be wound on the core 200 during the rewinding process.

Preferably, the adhesive side is entirely covered by adhesive.

In particular, the adhesive film 41, once connected to the upper strip 201 on the adhesive side, can remain fixed thereto.

In particular, the term "connected" means that an edge of the adhesive film 41 is attached at one point to the upper strip 201. In other words, at least the free end of the adhesive film 41 is anchored at least at one point to the upper strip 201.

Advantageously, when the forming station 20 winds the strips 201, 202 one on the other, it also causes the adhesive film 41, previously connected to the upper strip 201, to adhere to the upper strip 201, so that the upper strip 201 is at least partially covered by the adhesive film 41.

The adhesive film 41 makes the outer surface of the core 200 slippery.

The core 200 is thus more easily separable, and therefore extractable, from the paper plies compared to the known ones, as it is covered by such an adhesive film 41.

Preferably, the adhesive film 41 is a plastic film.

The dispenser assembly 40 is configured to unwind the adhesive film 41 simultaneously with the unwinding of the reels 11, 12.

In accordance with an embodiment, the adhesive film 41 can be connected to the upper strip 201 manually by an operator. Alternatively, the dispenser assembly 40 can comprise an arm or other element adapted to connect the adhesive film 41 to the upper strip 201.

In accordance with a first preferred embodiment, the adhesive film 41 is connected to the upper strip 41 at the forming station 20.

Preferably, the dispenser assembly 40 is placed at the unwinding station 10, upstream of the forming station 20.

In other words, preferably when starting the process, the adhesive film 41 is dispensed and connected to the upper strip 201, that is, at least the free end of the adhesive film 41 is anchored at least at one point to the upper strip 201, before the strips 201, 202 are wound and joined in the forming station 20. In this way, the adhesive film 41, which was connected to the upper strip 201 at the forming station 20 when starting the process, is caused to adhere at each point to the upper strip 201 during the winding of the strips 201, 202 when forming the tube 203.

In accordance with a second embodiment, alternative to the first, the adhesive film 41 could also be connected and applied to the strip 201 between the forming station 20 and the cutting station 30.

For example, the dispenser assembly 40 can be placed downstream of the forming station 20 and upstream of the cutting station 30.

Preferably, the dispenser assembly 40 comprises a spindle 42 adapted to engage with a roll 41' of adhesive film 41 and to unwind the roll 41' while the unwinding station 10 unwinds the reels 11, 12.

The spindle 42 is, for example, of the expandable type.

Preferably, the dispenser assembly 40 further comprises a brake 43 configured to tension the adhesive film 41 of the roll 41' being unwound.

More preferably, the corewinder 100 comprises a control unit 44 placed in signal communication with the brake 43. Such a control unit 44 is in particular adapted to adjust the braking action of the brake 43 as a function of the unwinding speed.

Still preferably, the dispenser assembly 40 comprises a disc 45 which is integral with the spindle 42 and connected to the brake 23. The brake 43 is in particular configured to brake the disc 45 more or less to adjust the tensioning of the adhesive film 41 being unwound, depending on the type of cardboard of the strips 201, 202 from the reels 11, 12 being unwound. Indeed, the unwinding speed of the reels 11, 12 depends on the type of cardboard.

Preferably, the brake 43 comprises a pneumatic or electro-pneumatic caliper adapted to act on the disc 45.

Preferably, the corewinder 100 comprises a position sensor (not visible in the attached figures) configured to detect an interruption in the adhesive film 41 being unwound.

Such a position sensor is preferably placed in signal communication with the control unit 44.

In particular, the control unit 44 is adapted to stop the unwinding of the reels 11, 12, of the adhesive film 41, the winding of the tube 203, and the possible cutting of the tube 203 if an interruption in the adhesive film 41 being unwound is detected, for example due to tearing.

The present invention is applicable to known-type corewinders 100 by mounting the dispenser assembly 40 for adhesive film 41 thereon and by suitably configuring the control unit 44.

The unwinding station 10, the forming station 20, and the cutting station 30 are therefore preferably of the known type.

Preferably, the unwinding station 10 comprises two or more unwinding rollers 13, 14, each adapted to accommodate a reel 11, 12 and to unwind the respective reel 11, 12.

The dispenser assembly 40 is preferably mounted downstream of the unwinding rollers 13, 14.

Preferably, the unwinding station 10 also comprises a changing roller 15, 16 for each unwinding roller 13, 14. The changing rollers 15, 16 intervene by switching places with the unwinding rollers 13, 14 when the reels 11, 12 on the unwinding rollers 13, 14 are finished.

Still preferably, the unwinding station 10 comprises an oil applicator 17 configured to apply oil to a lower surface of the lower strip 202 from a first reel 11 being unwound from a respective unwinding roller 13.

Further preferably, the unwinding station 10 comprises a glue applicator 18 configured to apply glue to a lower surface of the upper strip 201 from a second reel 12 being unwound from a respective unwinding roller 14. In this way, it is possible to join the upper strip 201 to the lower strip 202 when forming the tube 203.

The oil applicator 17 and the glue applicator 18 are known, as well as the changing rollers 15, 16.

The forming station 20 preferably comprises a support spindle 21 and belts 22 which are of the known type.

Preferably, the corewinder 100 also comprises a transferring station 50 interposed between the forming station 20 and the cutting station 30. The transferring station 50 is adapted to allow the glue to dry and the tube 203 formed when transporting from the forming station 20 to the cutting station 30 to stabilize.

In accordance with the second embodiment, the dispenser assembly 40 can be placed at any position within the transferring station 50.

Preferably, the adhesive film 41 is an adhesive tape, preferably having a polymeric support, for example PE, PP or PVC.

Advantageously, the adhesive film 41 is already available in the form of rolls with pre-applied adhesive, and therefore there is no need to form a roll of adhesive film 41 or to provide glue assemblies to apply the adhesive to a non-adhesive film. This significantly simplifies both the structure of the corewinder 100 and the process to form the core 200.

Another part of the present invention is a process to form a core 200 for tissue paper logs from cardboard strips 201, 202.

The process in accordance with the present invention comprises a step of unwinding two or more reels 11, 12 of a cardboard strip 201, 202.

The process also comprises a step of spirally winding at least an upper strip 201 and a lower strip 202 being unwound from the reels 11, 12 one on the other, joining them to form a tube 203.

The process also comprises a step of cutting the tube 203 being formed to obtain a core 200.

In accordance with the present invention, the process further comprises a step of unwinding an adhesive film 41 connectable to the upper strip 201 to obtain a core 200 at least partially covered by adhesive film 41.

Such process can preferably be carried out by means of the corewinder 100 described above.

Preferably, the step of unwinding the adhesive film 41 is simultaneous with the step of unwinding the two or more reels 11, 12.

Preferably, the process comprises a further step of connecting the adhesive film 41 to the upper strip 201. The step of connecting the adhesive film 41 involves attaching the adhesive side of the adhesive film 41 to the upper strip 201. Preferably, the adhesive side of the adhesive film 41 is attached directly to the upper strip 201.

Advantageously, with the step of winding, the adhesive film 41, previously connected to the upper strip 201, is also adhered to the upper strip 201 so that the upper strip 201 is at least partially covered by the adhesive film 41.

Preferably, the steps of unwinding the adhesive film 41, connecting the adhesive film 41 and winding are performed cold.

In accordance with an embodiment, such a step of connecting is performed manually by an operator, preferably at the cutting station 30.

Preferably, the step of connecting is performed before the step of cutting.

In accordance with the first preferred embodiment, the step of connecting is performed before the step of winding.

Alternatively, in accordance with the second embodiment, the step of connecting could be performed after the step of winding, and in any case before the step of cutting.

Preferably, the adhesive film 41 is connected to the upper strip 201 while the machine is stopped, after the adhesive film and the strips 201, 202 have been unwound by an amount sufficient to reach the cutting station 30. Subsequently, the corewinder 30 is started, and the unwinding of the adhesive film 41 and of the reels 11, 12 continues, while at the same time the winding of the strips 201, 202 is also started to form the tube 203, which, once reached a predetermined length, will be cut.

Preferably, the process also comprises a step of braking the unwinding of the roll 41' of adhesive film to tension the adhesive film 41.

Still preferably, the process comprises a step of stopping the dispenser assembly 40 if an interruption in the adhesive film 41 being unwound is detected. Such a step also involves stopping the unwinding of the reels 11, 12, the winding of the strips 201, 202, and the cutting of the tube 203 being formed.

Preferably, the process also comprises a step of applying oil to a lower surface of the lower strip 202 from the first reel 11 being unwound from a respective unwinding roller 13.

Preferably, the process also comprises a step of applying glue to a lower surface of the upper strip 201 from the second reel 12 being unwound from a respective unwinding roller 14.

The step of applying oil and the step of applying glue are preferably performed simultaneously and according to the known modes, before the step of winding.

Another part of the present invention is a tissue paper log 300. Such a log 300 forms the precursor of one or more tissue paper rolls of the no-core or "coreless" type.

The log 300 comprises a core 200 that comprises at least a cardboard upper strip 201 and a cardboard lower strip 202, spirally wound one on the other and joined together. Such a core 200 also comprises an adhesive film 41 placed at least partially covering the upper strip 201. The adhesive film 41 preferably fully covers the cardboard.

The adhesive film 41 directly contacts the upper strip 201.

The log 300 comprises at least one tissue paper ply 400 continuously wound in spirals on such a core 200.

The tissue paper ply 400 directly contacts the adhesive film 41, from the non-adhesive side.

The tissue paper ply 400 is attached to the core 200 with the first innermost spiral by means of a glue having good "release" properties, that is, capable of drying and detaching easily.

The core 200 is preferably makeable by means of the corewinder 100 and the process described above.

The core 200 of the log 300 according to the present invention is similar to the known cores, but additionally provides the adhesive film 41 placed to cover the cardboard.

The core 200 is in fact intended to be subsequently extracted from the log 300.

Advantageously, the adhesive film 41 applied on a cardboard core reduces friction and increases the smoothness between the core 200 and the tissue paper plies wound in spirals thereon, facilitating the detachment of the plies from the core 200 itself when extracting the core 200.

The corewinder, the process, and the log thus conceived are susceptible to numerous modifications and variants, all falling within the scope of the inventive concept; furthermore, all details are replaceable by technically equivalent elements. In practice, the materials used, as long as compatible with the specific use, as well as the dimensions and contingent shapes, can be any depending on the technical requirements.

## Claims

1. Corewinder (100) to form a core (200) for tissue paper logs (300) from cardboard strips (201, 202), said corewinder (100) comprising:
- an unwinding station (10) adapted to unwind two or more reels (11, 12) of a cardboard strip (201, 202);
- a forming station (20) downstream of said unwinding station (10); said forming station (20) being adapted to spirally wind at least an upper strip (201) and a lower strip (202) being unwound from said reels (11, 12) one on the other, joining them to form a tube (203);
- a cutting station (30) downstream of said forming station (20); said cutting station (30) being configured to cut the tube (203) being formed to obtain a core (200) ;
said corewinder (100) being **characterized by** comprising:
- a dispenser assembly (40) for an adhesive film (41), said dispenser assembly (40) being configured to unwind an adhesive film (41) connectable to said upper strip (201) to obtain a core (200) at least partially covered by said adhesive film.

2. Corewinder (100) according to the previous claim, wherein said dispenser assembly (40) comprises:
- a spindle (42) adapted to engage with a roll (41') of adhesive film (41) and to unwind said roll (41') while said unwinding station (10) unwinds said reels (11, 12);
- a brake (43) configured to tension the adhesive film (41) of the roll (41') being unwound;
- a control unit (44) placed in signal communication with said brake (43).

3. Corewinder (100) according to claim 1 or 2, wherein said dispenser assembly (40) is placed at said unwinding station (10) upstream of said forming station (20).

4. Corewinder (100) according to claim 1 or 2, wherein said dispenser assembly (40) is placed downstream of said forming station (20) and upstream of the cutting station (30).

5. Corewinder (100) according to any of the preceding claims, comprising a position sensor configured to detect an interruption of the adhesive film (41) being unwound.

6. Process to form a core (200) for tissue paper logs from cardboard strips (201, 202), said process comprising the following steps:
- unwinding two or more reels (11, 12) of a cardboard strip (201, 202);
- spirally winding at least an upper strip (201) and a lower strip (202) being unwound from said reels (11, 12) one on the other, joining them to form a tube (203);
- cutting said tube (203) being formed to obtain a core (200);
said process being **characterized by** comprising a step of:
- unwinding an adhesive film (41) connectable to the upper strip (201) to obtain a core (200) at least partially covered by said adhesive film (41).

7. Process according to the previous claim, comprising a further step of connecting said adhesive film (41) to said upper strip (201).

8. Process according to the previous claim, wherein said step of connecting is performed before the step of cutting.

9. Process according to claim 7 or 8, wherein said step of connecting is performed before the step of winding.

10. Process according to any of claims 6 to 9, comprising a step of stopping said dispenser assembly (40) if an interruption of the adhesive film (41) being unwound is detected.

11. Tissue paper log (300) comprising:
- a core (200) comprising:
- at least a cardboard upper strip (201) and a cardboard lower strip (202) spirally wound one on the other and joined together;
- an adhesive film (41) placed at least partially as a cover of said upper strip (201);
- at least one tissue paper ply (400) continuously wound in spirals on said core (200).
